# EUROPÄISCHE PATENTSCHRIFT

(11) **EP 4 064 788 B1**
(45) Veröffentlichungstag und Bekanntmachung des Hinweises auf die Patenterteilung: **12.11.2025**
(21) Anmeldenummer: 22162162.6
(22) Anmeldetag: 15.03.2022
(51) Int. Cl.: H05B 3/44, F24H 1/00

(54) **ELEKTRISCHE HEIZVORRICHTUNG**
ELECTRIC HEATING DEVICE
DISPOSITIF DE CHAUFFAGE ÉLECTRIQUE

(30) Priorität: 16.03.2021 DE 102021106299
(43) Veröffentlichungstag der Anmeldung: 28.09.2022
(73) Patentinhaber: Eberspächer catem GmbH & Co. KG, 76863 Herxheim (DE)
(72) Erfinder: Kachelhoffer, Patrick, 67160 Seebach (FR)
(74) Vertreter: Grünecker Patent- und Rechtsanwälte PartG mbB

(56) Entgegenhaltungen:
- EP-A1- 0 899 985
- EP-A1- 2 637 474
- DE-A1- 102018 221 654
- DE-A1- 102019 211 567
- US-A1- 2021 033 303

## Beschreibung

Die vorliegende Erfindung betrifft eine elektrische Heizvorrichtung mit einem Gehäuse, das eine zumindest ein PTC-Element üblicherweise unter Vorspannung haltende Heizelementaufnahme und zumindest einen Fluidkanal ausbildet. Die PTC-Heizeinrichtung hat ein Einpressprofil, welches zum Einbringen in die Heizelementaufnahme angepasst ausgebildet ist und eine PTC-Aufnahme bildet. In dieser PTC-Aufnahme sind zumindest ein PTC-Element, elektrisch leitend daran anliegende Leiterbahnen und optional eine Isolierung vorgesehen, die die Leiterbahnen isoliert gegen die Heizelementaufnahme abstützt. Diese optional vorgesehene Isolierung kann vorgesehen sein, wenn - was wohl eher die Regel ist - das Einpressprofil selbst aus einem Metall und damit einem elektrisch leitenden Material gebildet ist.

Nach der vorliegenden Erfindung sollen die Gehäusekomponenten potenzialfrei sein, d. h. nicht für die Leitung des Leistungsstromes Verwendung finden.

Eine elektrische Heizvorrichtung mit den oberbegrifflichen Merkmalen von Anspruch 1 ist beispielsweise aus EP 2 637 474 A1 bzw. EP 2 337 425 A1 bekannt. Bei diesem Stand der Technik ist das Gehäuse mit einer U-förmigen Aufnahmetasche versehen, das die Heizelementaufnahme ausbildet und in der ein Profil vorgesehen ist, das in der Aufnahmetasche eingepresst ist und zumindest ein PTC-Element in sich aufnimmt. Dabei offenbart die in EP 2 337 425 A1 beschriebene Lösung eine an einer Hauptseitenfläche des PTC-Elementes anliegende Leiterbahn als Blechstück mit aus der Ebene des Blechstücks herausgebogenen Kontaktvorsprüngen. Diese dienen lediglich einer verbesserten elektrischen Kontaktierung, jedoch nicht der Verspannung. Das Vorspannen erfolgt vielmehr bei dem Stand der Technik mit einem Keilelement, welches in die Aufnahmetasche gedrängt wird, um die die Wärme erzeugenden Lagen gegebenenfalls unter Zwischenlage der Isolierung möglichst gut wärmeleitend gegen die Innenflächen der Heizelementaufnahme anzulegen und so einerseits für einen guten Wärmeaustrag zu sorgen, andererseits aber auch die Leiterbahnen zuverlässig elektrisch mit dem PTC-Element zu kontaktieren.

Bei einem PTC-Element handelt es sich um ein halbleitendes Keramikbauteil mit selbstregelnden Eigenschaften. Bei zunehmender Erwärmung steigt der elektrische Widerstand. So nimmt die Fähigkeit des PTC-Elementes ab, elektrische Leistung aufzunehmen und in Wärme umzuwandeln. Für einen guten Wirkungsgrad ist daher eine gute thermische Kontaktierung des PTC-Elementes zur Abfuhr der darin erzeugten Wärme unerlässlich.

Es hat in der Vergangenheit nicht an Vorschlägen gefehlt, den unterschiedlichen Anforderungen an eine elektrische Heizvorrichtung gerecht zu werden. Die elektrische Heizvorrichtung nach der vorliegenden Erfindung kommt dabei insbesondere in einem Kraftfahrzeug zum Einsatz. Hier gelten besondere Bedingungen, denen die elektrische Heizvorrichtung genügen muss. Zum einen muss die elektrische Heizvorrichtung möglichst gewichtssparend ausgebildet sein. Zum anderen ist den Bedingungen im Kraftfahrzeug Rechnung zu tragen. So muss die elektrische Heizvorrichtung den Vibrationen in einem Kraftfahrzeug dauerhaft standhalten und über Jahre betriebsfähig sein. Schließlich wird heutzutage auch eine Skalierbarkeit der konstruktiven Ausgestaltung gefordert, sodass sich die elektrische Heizvorrichtung leicht an unterschiedliche Modelle und Ausstattungsvarianten anpassen lässt. Die elektrische Heizvorrichtung nach der vorliegenden Erfindung kann als alleiniger Heizer beispielsweise in einem elektrisch betriebenen Fahrzeug vorgesehen sein. Diese elektrische Heizvorrichtung heizt zumindest den Innenraum, gegebenenfalls auch Komponenten des Antriebs des elektrisch betriebenen Fahrzeuges. Die elektrische Heizvorrichtung kann aber auch als Zuheizer in einem Fahrzeug mit Verbrennungsmotor vorgesehen sein, dessen Kühlwasser über einen Wärmetauscher abgeführt und zur Klimatisierung des Fahrzeuginnenraumes genutzt wird. Es versteht sich, dass die elektrische Heizvorrichtung nicht dauerhaft betrieben wird. So ist die elektrische Heizvorrichtung auch Wärmeschwankungen ausgesetzt, die zu unterschiedlichen Dehnungs- und Verspannungszuständen innerhalb der elektrischen Heizvorrichtung führt. Diese gehen mit dimensionalen Änderungen der konstruktiven Ausgestaltung der elektrischen Heizvorrichtung einher, die jedenfalls bei der erfindungsgemäßen elektrischen Heizvorrichtung nicht dazu führen dürfen, dass eine gute elektrische und wärmemäßige Kontaktierung des PTC-Elementes während der Lebensdauer der elektrischen Heizvorrichtung verloren geht.

Die US 2021/033303 A1 betrifft eine gattungsgemäße elektrische Heizvorrichtung. Die DE 10 2019 211567 A1 und die DE 10 2018 221654 A1 betreffen jeweils Bleche mit Vorsprüngen, die zwischen einem PTC-Element und einem Gehäuse um das PTC-Element anzuordnen sind, um eine Vorspannung auf das PTC-Element aufzubringen. Die EP 0 899 985 A1 betrifft ein Gehäuse einer elektrischen Heizvorrichtung aus Strangpressprofilen.

Die vorliegende Erfindung will eine elektrische Heizvorrichtung der eingangs genannten Art angeben, die in verbesserter Weise den obigen Anforderungen genügt. Die erfindungsgemäße elektrische Heizvorrichtung soll eine gute Wärmeauskopplung aus dem PTC-Element bei vermindertem Herstellungs- und Montageaufwand ermöglichen.

Zur Lösung dieses Problems wird mit der vorliegenden Erfindung eine elektrische Heizvorrichtung mit den Merkmalen von Anspruch 1 vorgeschlagen. Diese hat in an sich bekannter Weise zumindest ein PTC-Element und elektrisch leitend daran anliegende Leiterbahnen üblicherweise in Form von Blechstreifen. Die dadurch gebildete Heizzelle gegebenenfalls umgeben von einer Isolierung ist in einem Einpressprofil vorgesehen. Bei dem Einpressprofil handelt es sich um ein in der Regel zylindrisches einheitliches Bauteil. Das Einpressprofil kann aus einer Keramik gebildet sein. In diesem Fall kann auf die Isolierung verzichtet werden. Das Einpressprofil ist indes üblicherweise aus einem Metall gebildet. Das Einpressprofil ist bevorzugt als Strangpressprofil hergestellt und auf Länge geschnitten.

In gleicher Weise ist das Gehäuse der erfindungsgemäßen elektrischen Heizvorrichtung als Strangpressprofil ausgeformt und auf Länge geschnitten. Es besteht die Möglichkeit, mehrere solcher Gehäuse in der elektrischen Heizvorrichtung zu vereinen, wodurch eine einfache Anpassung an die gewünschte Heizleistung und somit an verschiedene Fahrzeugtypen und -ausstattungen möglich ist.

Das Einpressprofil und das Gehäuse haben Verformungsvorsprünge, die in der Heizelementaufnahme und damit zwischen dem Gehäuse und dem Einpressprofil vorgesehen sind. Durch die Verformungsvorsprünge ist das Einpressprofil unter Vorspannung in der Heizelementaufnahme gehalten. Die Vorspannung ist derart, dass sich innerhalb der PTC-Aufnahme eine Haltung des PTC-Elementes und der Leiterbahnen gegebenenfalls der Isolierung ergibt, bei welcher diese Lagen zumindest in Bezug auf die Hauptseitenflächen des PTC-Elementes gut wärmeleitend gegeneinander angelegt werden, regelmäßig unter Vorspannung gegeneinander angelegt sind. Die Hauptseitenflächen des PTC-Elementes sind dabei die größten Flächen des PTC-Elementes. Dieses ist üblicherweise quaderförmig ausgebildet. Die Hauptseitenflächen liegen parallel zueinander. Die anderen Flächen bilden üblicherweise einen umlaufenden Rand aus, der die beiden Hauptseitenflächen miteinander verbindet.

Die erfindungsgemäße elektrische Heizvorrichtung hat dementsprechend bevorzugt zwei Strangpressprofile. Das eine Strangpressprofil bildet das Gehäuse aus. Das andere Strangpressprofil bildet das Einpressprofil aus. Zwischen beiden Strangpressprofilen sind die Verformungsvorsprünge vorgesehen. Auch diese Verformungsvorsprünge erstrecken sich üblicherweise in Erstreckungsrichtung der Profile. Beim Einschieben des Einpressprofils in die Heizelementaufnahme des Gehäuses werden die Verformungsvorsprünge verformt. Die Verformung kann eine plastische und/oder elastische Verformung sein. Aufgrund der Verformung ergibt sich eine solide wärmeleitende und elektrische Anlage zwischen dem PTC-Element, den gegen die Hauptseitenflächen anliegenden Leiterbahnen und der gegenüberliegend dazu vorgesehenen Innenfläche der PTC-Aufnahme gegebenenfalls unter Zwischenlage der Isolierung.

Abhängig von der Länge des Strangpressprofils können mehrere PTC-Elemente hintereinander vorgesehen sein. Die Länge des Strangpressprofils kann beliebig abgeschnitten werden. So lässt sich die elektrische Heizvorrichtung auch durch Änderung der Länge des Gehäuses an die gewünschte Heizleistung anpassen. Die PTC-Elemente sind dabei gleichmäßig in Längsrichtung des Einpressprofils hintereinander vorgesehen. Wie aus dem Stand der Technik allgemein bekannt, können die PTC-Elemente in einem Positionsrahmen aufgenommen sein, der sich im Wesentlichen zwischen den beiden Leiterbahnen erstreckt und jeweils Aufnahmen für die PTC-Elemente in Längsrichtung des Einpressprofils versetzt hintereinander ausbildet.

Zur gleichmäßigen Auskopplung der von dem zumindest einen PTC-Element erzeugten Wärme bildet das Gehäuse mehrere sich parallel zueinander erstreckende Fluidkanäle aus. Die zumindest eine Heizelementaufnahme ist zumindest zwischen zwei Fluidkanälen vorgesehen. Es hat sich als vorteilhaft erwiesen, zu beiden Seiten der Heizelementaufnahme zumindest zwei, bevorzugt vier Fluidkanäle vorzusehen. Eine gerade Anzahl an Fluidkanälen wird dabei bevorzugt, da an einer Stirnseite des Gehäuses üblicherweise das Fluid eingeleitet und auf der gegenüberliegenden Seite lediglich umgelenkt wird, wobei eine Strömungsführung einfacher ist, wenn die Überleitung des Fluids über eine Heizelementaufnahme hinaus und quer zu deren Erstreckung auf Seiten der Einleitung des Fluids erfolgt. So kann auf der gegenüberliegenden Seite eine Abdeckung zu dem Gehäuse relativ einfach ausgebildet sein.

Gegenüberliegend zu einer solchen, die Strömung üblicherweise von einem in den anderen Fluidkanal des Gehäuses umlenkenden Abdeckung ist bevorzugt ein Anschlussgehäuse vorgesehen, das einen der Fluidkanäle mit einer Einlassöffnung für das zu erwärmende Fluid und den anderen der Fluidkanäle mit einer Auslassöffnung für das zu erwärmende Fluid verbindet. Es versteht sich, dass das Gehäuse eine Vielzahl von Fluidkanälen ausbilden kann, die jeweils durch Umlenkung der Strömung an den Stirnseiten des Strangpressprofils in Reihe geschaltet und lediglich an ihrem Anfang und ihrem Ende mit der Ein- bzw. Auslassöffnung verbunden sind. Allerdings können Fluidkanäle auch parallel zueinander geschaltet sein, was den Vorteil einer höheren Temperaturdifferenz zwischen der Heiztemperatur des PTC-Elementes und der Temperatur des Fluids und damit einer effektiveren Wärmeübertragung und den Nachteil einer gegebenenfalls geringeren Endtemperatur des in der elektrischen Heizvorrichtung erwärmten Fluids mit sich bringt.

Die an der Stirnseite des Gehäuses miteinander kommunizierenden, parallel verlaufenden Fluidkanäle sind vorzugsweise von einer Kanaldichtung umgeben, die die benachbarten Fluidkanäle gegenüber der Abdeckung bzw. dem Anschlussgehäuse abdichtet. Diese Kanaldichtung umgibt üblicherweise lediglich zwei unmittelbar miteinander kommunizierende Fluidkanäle. Diese Fluidkanäle kommunizieren bevorzugt durch eine Mulde, die an der Stirnseite des Gehäuses ausgespart ist. So kann die Abdeckung bzw. das Anschlussgehäuse eng an dem Gehäuse anliegen, ohne dass auf einen hinreichenden Strömungsdurchlass zwischen den benachbarten Fluidkanälen verzichtet wird.

Gegenüberliegend zu dieser Mulde ist jedenfalls auf Seiten des Anschlussgehäuses bevorzugt ein Leistungstransistor/IGBT vorgesehen, der wärmeleitend an dem Anschlussgehäuse anliegt. So kann im Bereich der Mulde der dort abgelenkte Fluidstrom den Leistungstransistor kühlen. Sofern das Anschlussgehäuse aus einem Metall ausgebildet ist, liegt zwischen dem Leistungstransistor und der Innenfläche des Anschlussgehäuses eine Isolierung, beispielsweise in Form einer Kapton-Folie. Der Leistungstransistor ist üblicherweise unmittelbar mit einer Leiterplatte verbunden, wie ein Ausführungsbeispiel für eine Steuereinrichtung im Sinne der vorliegenden Erfindung darstellt.

Vorzugsweise ist zwischen dem Gehäuse und dem Anschlussgehäuse eine Heizelementdichtung vorgesehen, die die Heizelementaufnahme abgedichtet umschließt. So hat die Heizelementaufnahme bevorzugt eine gesonderte Abdichtung. Es versteht sich, dass die Heizelementdichtung und die benachbart dazu vorgesehene Kanaldichtung abschnittsweise identisch sein können. Bevorzugt befindet sich ein einheitliches Dichtelement an der Stirnseite des Gehäuses jeweils zwischen dem Gehäuse und der Abdeckung bzw. dem Anschlussgehäuse. Innerhalb eines von der Heizelementdichtung umgebenen Bereiches weist das Anschlussgehäuse zumindest eine Durchführöffnung auf. Durch diese Durchführöffnung ist zumindest eine Kontaktzunge hindurchgeführt, die elektrisch mit einer der Leiterbahnen der zugeordneten PTC-Heizeinrichtung verbunden ist. Die entsprechenden Kontaktzungen ragen in das Anschlussgehäuse hinein und sind dort elektrisch angeschlossen. Der Anschluss erfolgt bevorzugt über eine Leiterplatte, die verschiedene PTC-Heizeinrichtungen zu Heizkreisen gruppieren kann und/oder zusätzlich auch bestückt ist, sodass diese Leiterplatte eine Steuereinrichtung im Sinne der vorliegenden Erfindung ausbilden kann. Die bestückte Leiterplatte kann aber auch auf einer anderen Ebene als diejenige Leiterplatte vorgesehen sein, die die Kontaktzungen elektrisch anschließt und nicht mit elektronischen Bausteinen bestückt ist.

Andere Möglichkeiten der Abdichtung sind denkbar. So kann das Gehäuse mit dem Anschlussgehäuse auch stoffschlüssig verbunden, insbesondere verschweißt oder verlötet oder verklebt sein.

Gemäß einer bevorzugten Weiterbildung der vorliegenden Erfindung ist die elektrische Heizvorrichtung in baulicher Einheit mit einer Steuereinrichtung vorgesehen. Diese Steuereinrichtung ist üblicherweise in das Anschlussgehäuse integriert. Die Steuereinrichtung dient der Steuerung der zumindest einen PTC-Heizeinrichtung. Die in einem einzigen Einpressprofil vorgesehenen PTC-Elemente sind dabei üblicherweise einem Heizkreis zugeordnet. Allerdings können mehrere parallel verlegte PTC-Heizeinrichtungen unterschiedlichen Heizkreisen zugeordnet und über die Steuereinrichtung geschaltet sein. Die Leiterbahnen überragen bei dieser bevorzugten Ausgestaltung endseitig das Gehäuse und sind in das Anschlussgehäuse verlängert. Die Leiterbahnen sind elektrisch an die Steuereinrichtung angeschlossen. Das Anschlussgehäuse ist üblicherweise unterteilt mit einem das Fluid führenden Strömungsleitungsbereich und einem die Steuereinrichtung aufnehmenden elektrischen Anschlussbereich für die Leiterbahnen. Der Anschlussbereich liegt üblicherweise auf einer dem Gehäuse abgewandten Seite des Strömungsleitungsbereichs und ist mit einem Deckel abgeschlossen. Die Leiterbahnen durchragen dementsprechend den Strömungsleitungsbereich. Üblicherweise bildet das Anschlussgehäuse Kanäle aus, in denen die Leiterbahnen getrennt von dem Fluid durch den Strömungsleitungsbereich hindurch und bis in den Anschlussbereich geführt sind.

Mit Blick auf die gewünschte Vorspannung in Richtung der Hauptseitenflächen des PTC-Elementes sind die besagten Verformungsvorsprünge regelmäßig zumindest, üblicherweise ausschließlich zwischen den Hauptseitenflächen des PTC-Elementes und der gegenüberliegenden Innenseite der Heizelementaufnahme vorgesehen. Im Hinblick auf eine gleichmäßige beiderseitige Verspannung sind zwischen jeder Hauptseitenfläche des PTC-Elementes und der gegenüberliegenden Innenseite der Heizelementaufnahme entsprechende Verformungsvorsprünge vorgesehen. Die Verformungsvorsprünge sind üblicherweise über die gesamte Breite des PTC-Elementes bzw. der Heizelementaufnahme und des Einpressprofils vorgesehen. Die Breite erstreckt sich quer zu der Längserstreckungsrichtung des Gehäuses als Strangpressprofil, d. h. quer zu der Press- bzw. Extrusionsrichtung bei der Herstellung des Strangpressprofils. Die Höhe erstreckt sich in der Ebene der Breite als dritte kartesische Richtung. Die Hauptseitenfläche des PTC-Elementes liegt dabei in einer die Breiten- und Längserstreckungsrichtung enthaltenden Ebene.

Im Hinblick auf eine möglichst symmetrische Wärmeauskopplung und einen gleichmäßigen Toleranzausgleich wird gemäß einer bevorzugten Weiterbildung der vorliegenden Erfindung vorgeschlagen, eine Vielzahl von Verformungsvorsprüngen zwischen einer der Hauptseitenflächen des PTC-Elementes und der gegenüberliegenden Innenseite der Heizelementaufnahme vorzusehen.

Im Hinblick auf eine gute Wärmeübertragung zwischen dem Einpressprofil und der Innenseite der Heizelementaufnahme wird gemäß einer bevorzugten Weiterbildung der vorliegenden Erfindung vorgeschlagen, dass die Verformungsvorsprünge als ineinander greifende Nut- und Feder-Elemente ausgebildet sind, wobei ein die Nut begrenzender Nutbegrenzungsvorsprung und/oder zumindest ein die Feder zumindest teilweise ausbildender Federvorsprung um eine sich in Einbring- bzw. Längserstreckungsrichtung erstreckende Achse verschwenkbar ist. Die Nut-Feder-Elemente nach dieser Weiterbildung überdecken sich in Höhenrichtung erheblich und liegen in Höhenrichtung aneinander an. Dies schafft einen soliden großflächigen Wärmeübertragungsweg zwischen dem Gehäuse und dem Einpressprofil. Zumindest ein die Nut begrenzender Nutbegrenzungsvorsprung und/oder zumindest ein die Feder zumindest teilweise ausbildender Federvorsprung sind zum freien Ende hin bevorzugt keilförmig ausgebildet. Durch die Keilform wird die elastische Verschwenkbewegung von zumindest einem der Verformungsvorsprünge beim Fügen gefördert. Dabei geht die vorliegende Erfindung davon aus, dass die Heizelementaufnahme sich in Längserstreckungsrichtung des Gehäuses erstreckt und die Verformungsvorsprünge, d. h. die Nut- und Feder-Elemente sich in dieser Richtung erstrecken. Die Fügebewegung erfolgt somit durch Einschieben des Einpressprofils in Längsrichtung des Gehäuses.

Gemäß einer bevorzugten Weiterbildung der vorliegenden Erfindung ist zwischen dem Einpressprofilteil und einer Hauptseitenfläche des PTC-Elementes zumindest ein Kompressionselement vorgesehen. Das Kompressionsteil befindet sich üblicherweise innerhalb des Einpressprofilteils und sorgt für eine zusätzliche Vorspannung der Komponenten innerhalb der PTC-Aufnahme, gegebenenfalls auch zur Vergleichmäßigung einer Vorspannkraft, sodass diese gleichmäßig auf eine Isolierung und/oder das PTC-Element übertragen wird. Dadurch wird eine lokale Überbeanspruchung beispielsweise einer keramischen Isolierplatte und/oder des keramischen PTC-Elementes verhindert. Das Kompressionselement kann durch eine aus Metall gebildete Feder ausgeformt sein. Die Feder erstreckt sich dabei üblicherweise in Breitenrichtung vollflächig über die Hauptseitenflächen. Das Kompressionselement ist bevorzugt zwischen einer Innenfläche der PTC-Aufnahme und einer Isolierlage vorgesehen, die an der Außenseite das PTC-Element abdeckt.

Gemäß einer bevorzugten Weiterbildung der vorliegenden Erfindung ist in die Heizelementaufnahme ein aushärtender Kleber eingebracht. Dieser kann verbleibende Freiräume zwischen den Verformungsvorsprüngen ausfüllen und somit die Wärmeleitung verbessern. Dazu kann der Kleber ein Kunststoffkleber mit guter Wärmeleitfähigkeit sein. Er kann beispielsweise ein Silikonkleber sein, dem gut wärmeleitende Partikel, beispielsweise Aluminiumoxidpartikel zugemischt sind. Der Kleber sichert ferner zusätzlich zu der Vorspannung aufgrund der Verformungsvorsprünge die Lage des Einpressprofils innerhalb der Heizelementaufnahme.

Weitere Einzelheiten, Merkmale und Vorteile der vorliegenden Erfindung ergeben sich aus der nachfolgenden Beschreibung eines Ausführungsbeispiels in Verbindung mit der Zeichnung. In dieser zeigen:
- Figur 1: Eine perspektivische Explosionsdarstellung eines Ausführungsbeispiels der vorliegenden Erfindung;
- Figur 1a: den Strömungsweg innerhalb des Ausführungsbeispiels nach Figur1;

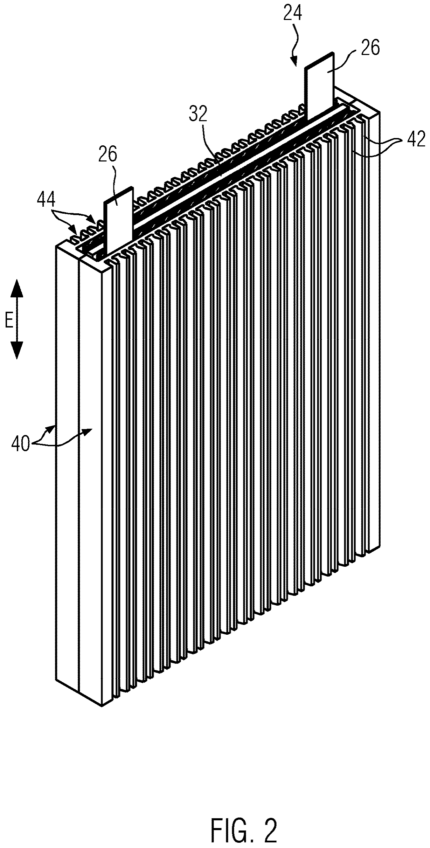

- Figur 2: eine perspektivische Seitenansicht eines Einpressprofilteils des Ausführungsbeispiels nach Figur 1;
- Figur 3: eine Querschnittsansicht durch das Einpressprofilteil nach Figur 2 bei Aufnahme in der elektrischen Heizvorrichtung nach Figur 1;
- Figur 4: eine Schnittansicht gemäß Figur 3 für eine Variante des Einpressprofilteils;
- Figur 5: eine stirnseitige Ansicht des Gehäuses;
- Figur 6: eine Schnittansicht entlang der Linie VI-VI gemäß der Darstellung in Figur 5 und
- Figur 7: eine Schnittansicht entlang der Linie VII-VII gemäß der Darstellung in Figur 5.

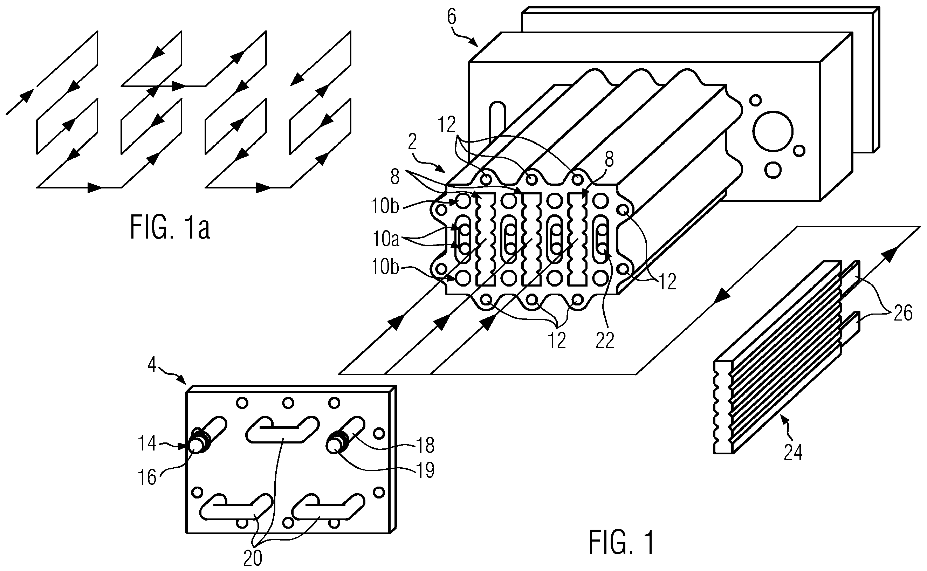

Die Figur 1 zeigt eine elektrische Heizvorrichtung mit einem Gehäuse 2, das zwischen einer Abdeckung 4 und einem Anschlussgehäuse 6 vorgesehen ist.

Das Gehäuse 2 hat vorliegend drei parallel zueinander vorgesehene Heizelementaufnahmen 8 mit im Wesentlichen rechteckigem Querschnitt und benachbart dazu vorgesehene Fluidkanäle 10. Seitlich zu den einzelnen Heizelementaufnahmen 8 sind jeweils vier Fluidkanäle vorgesehen. Die Fluidkanäle 10a führen Strömung von der Abdeckung 4 in Richtung auf das Anschlussgehäuse 6. Die Fluidkanäle 10b führen das Fluid in entgegengesetzter Richtung.

Auf dem Umfang verteilt weist das Gehäuse 2 mehrere Befestigungskanäle 12 auf, in denen nicht gezeigte Gewindestangen oder selbstschneidende Schrauben vorgesehen sind, über welche die Abdeckung 4 gegenüber dem Anschlussgehäuse 6 unter dichtendem Einschluss des Gehäuses 2 miteinander verbunden sind. Alternativ können auch in das Gehäuse 2 selbst einschneidende Schrauben verwendet werden, um die Abdeckung 4 bzw. das Anschlussgehäuse 6 abgedichtet gegen das Gehäuse 2 anzulegen.

Dabei hat die erfindungsgemäße Lösung den Vorteil, dass die Abdichtung der jeweiligen Heizelementaufnahmen 8 gegen ein einheitliches Gehäuse 2 erfolgt.

Die in Figur 1 jeweils oberen und unteren Fluidkanäle 10 kommunizieren mit Leitungsabschnitten der Abdeckung 4, die als Einlassstutzen 14, als Auslassstutzen 18 beziehungsweise als Umlenkstutzen 20 ausgebildet sind. Über die Umlenkstutzen wird eine Weiterleitung der in den Fluidkanälen 10 geführten Flüssigkeit über eine der Heizelementaufnahmen 8 hinaus und quer dazu bewirkt. An dem freien Ende des Einlassstutzens 14 ist eine Einlassöffnung 16 ausgebildet. An dem freien Ende des die als Auslassstutzens 18 ist eine Auslassöffnung 19 ausgebildet.

Die Zirkulation des Mediums ist in dem Detail gemäß Figur 1a erkennbar. Daraus ergibt sich auch die Leitung des Fluids auf Seiten des Anschlussgehäuses 6. Die Umlenkung auf einer Ebene einer Heizelementaufnahme 8 erfolgt üblicherweise innerhalb des Gehäuses 2, sodass die Abdeckung 4 beziehungsweise das Anschlussgehäuse 6 in diesem Bereich lediglich als ebene Platte stirnseitig abgedichtet gegen das Gehäuse 2 anliegt. Dazu enden die freien Enden der Fluidkanäle 10 in einer in dem Gehäuse 2 ausgesparten Mulde 22.

Das Gehäuse 2 ist als Strangpressprofil hergestellt und auf Länge geschnitten. Mit entsprechender Länge ist das mit Bezugszeichen 24 gekennzeichnete Einpressprofil ausgeformt. In jeder der Heizelementaufnahmen 8 ist vorliegend ein Einpressprofil 24 vorgesehen.

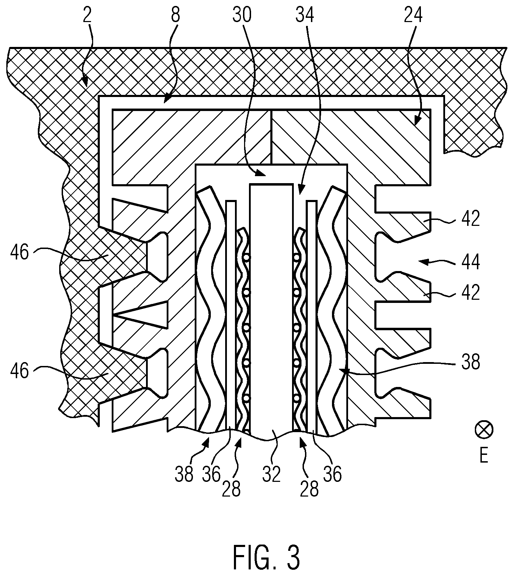

Das Einpressprofil ist in Figur 1 erkennbar von Kontaktzungen 26 überragt, die einteilig an Kontaktblechen ausgeformt sind, welche Leiterbahnen 28 ausbilden, die in einer PTC-Aufnahme 30 aufgenommen und elektrisch leitend an PTC-Elementen 32 einer PTC-Heizeinrichtung 34 anliegen. Details hierzu sind insbesondere Figur 3 zu entnehmen.

Mit Bezugszeichen 36 ist eine Isolierlage gekennzeichnet, die außenseitig die Leiterbahnen 28 abdeckt. Zwischen dieser aus einer Keramikplatte gebildeten Isolierlage 36 und einer Hauptseitenfläche der PTC-Aufnahme 30 befindet sich jeweils ein Kompressionselement 38.

Zum Einbringen der zuvor erwähnten Komponenten in die PTC-Aufnahme 30 ist das Einpressprofil 24 aus zwei Profilteilen 40 gebildet, die miteinander verbunden sind. Die Profilteile 40 sind üblicherweise identisch ausgebildet und können dementsprechend aus einem einzigen extrudierten Strangpressprofil geschnitten sein. Die Profilteile 40 sowie das Gehäuse 2 können beispielsweise aus Aluminium gebildet sein.

Von gegenüberliegenden Hauptseitenflächen des Einpressprofils 24 ragen jeweils Verformungsvorsprünge in Form von Nutbegrenzungsvorsprüngen 42 ab.

Wie insbesondere Figur 3 verdeutlicht, sind an der Außenseite der Profilteile 40 eine Vielzahl von identisch ausgebildeten Nuten 44 zwischen paarweise vorgesehenen Nutbegrenzungsvorsprüngen 42 ausgespart. Die Nuten 44 erstrecken sich in der Einbringrichtung der Heizelementaufnahme 8, die in Fig. 1 mit E gekennzeichnet und der Extrusionsrichtung bei der Herstellung des Strangpressprofils entspricht.

Von der Innenseite der Heizelementaufnahme 8 wiederum ragen Federvorsprünge 46 ab. Diese Federvorsprünge 46 sind einteilig an dem als Strangpressprofil ausgebildeten Gehäuse 2 ausgeformt. Wie die Querschnittsansicht gemäß Figur 3 vermittelt, laufen die Federvorsprünge 46 zu ihrem freien Ende hin keilförmig zu. In entsprechender Weise sind auch die Nutbegrenzungsvorsprünge 42 zu ihrem freien Ende hin keilförmig zulaufend ausgebildet. Es versteht sich, dass lediglich die die Nut 44 jeweils begrenzenden Flächen der Nutbegrenzungsvorsprünge 42 eine solche Gestaltung haben. Zur Verdeutlichung dieses Sachverhaltes sind in Figur 3 auf der rechten Seite die Federvorsprünge 46 weggelassen.

Bei dem in Figur 3 gezeigten Ausführungsbeispiel wird im Rahmen der Montage zunächst das Einpressprofil 24 mit der PTC-Heizeinrichtung 34 und den Kompressionselementen 38 bestückt. Danach wird die so vormontierte Baugruppe in die Heizelementaufnahme 8 eingesetzt. Dabei greifen die Federvorsprünge 46 in die ihnen zugeordneten Nuten 44 ein. Es ergibt sich eine aus dem Vergleich der rechten zu der linken Seite nach Figur 3 zu erkennende Verformung im Bereich der Nutbegrenzungsvorsprünge 42. Durch diese erfolgt ein gewisser Toleranzausgleich. Zusätzlich wird zum Toleranzausgleich das Kompressionselement 38 verformt. Idealerweise liegt das Kompressionselement 38 nach erfolgter Montage im Wesentlichen vollflächig einerseits gegen die Innenfläche der PTC-Aufnahme 30 und andererseits gegen die Außenseite der Isolierlage 36 an.

Das Kompressionselement 38 kann aus Aluminium, Kupfer, Kupferberyllium oder einem anderen gut wärmeleitfähigen dauerhaft elastische Vorspannkräfte aufbringenden Werkstoff bestehen.

Verbleibende Hohlräume in der Heizelementaufnahme 8 können durch eine gut wärmeleitfähige Masse, beispielsweise eine mit wärmeleitenden Partikeln gefüllte aushärtende Kunststoffmasse ausgefüllt werden.

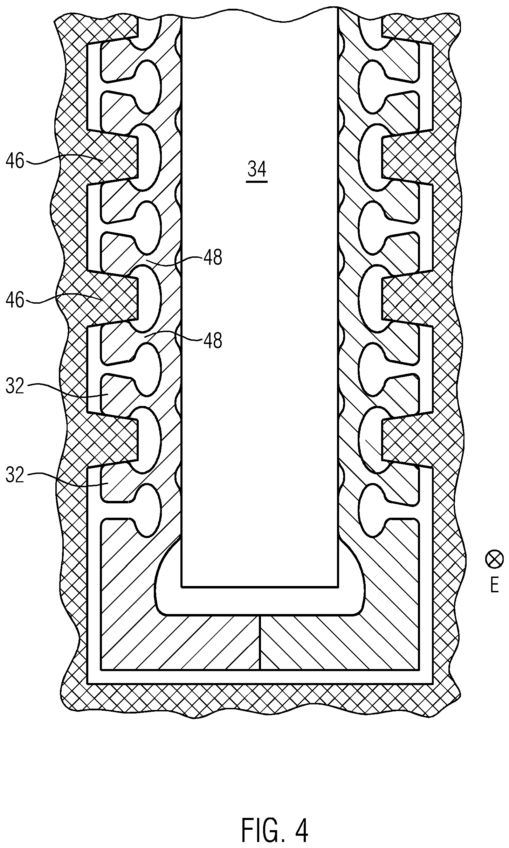

Bei der in Figur 4 gezeigten Variante sind die Nutbegrenzungsvorsprünge 42 über einen relativ dünnen Steg 48 an dem übrigen Profilteil 40 angebunden. Dieser Steg 48 schafft eine Schwenkachse, die sich im Wesentlichen in Einbringrichtung E erstreckt. Bei diesem Ausführungsbeispiel kann auf Kompressionselemente verzichtet werden. Benachbarte Nutbegrenzungsvorsprünge 42 zu unterschiedlichen Nuten 44 sind hinreichend weit voneinander beabstandet, sodass diese beim Einbringen der keilförmigen Federvorsprünge 46 jeweils um ihre Schwenkachse verschwenken können, ohne gegeneinander zu stoßen. Dadurch wird ein erheblicher Toleranzausgleich möglich. Die Lagen der PTC-Heizeinrichtung 34 innerhalb des Einpressprofils 24 werden dabei mit guter elastischer Spannung gegen die Innenfläche der PTC-Aufnahme 30 angelegt, wodurch die Wärmeauskopplung verbessert ist.

Die Figur 4 verdeutlicht auch das Aufwölben der Innenflächen der PTC-Aufnahme 30 derart, dass diese eine in der Querschnittsansicht im Wesentlichen punktuell, in Längsrichtung linienförmig an der Isolierlage 36 anliegende Anlagefläche ausformt. Durch diese Verformung des Einpressprofils 24 wird eine zusätzliche elastische Vorspannung auch des PTC-Elementes 32 in der PTC-Aufnahme 30 bewirkt.

Wie die spezielle Beschreibung verdeutlicht ergibt sich durch die Verformungsvorsprünge vorliegend in Form der Nutbegrenzungsvorsprünge 42 und der Federvorsprünge 46 eine elastische Vorspannung zwischen dem Gehäuse 2 und dem Einpressprofil 24. Dadurch wird das PTC-Element mit guter Wärmeleitung an die Lagen der PTC-Heizeinrichtung 34 angelegt. Auch wird eine gute elektrische Kontaktierung zwischen der Leiterbahn 28 und dem PTC-Element 32 bewirkt.

Wie Figur 1 verdeutlicht überragen die Kontaktzungen 26 endseitig das Einpressprofil 24. Diese Kontaktzungen 26 sind in dem Anschlussgehäuse 6 elektrisch kontaktiert.

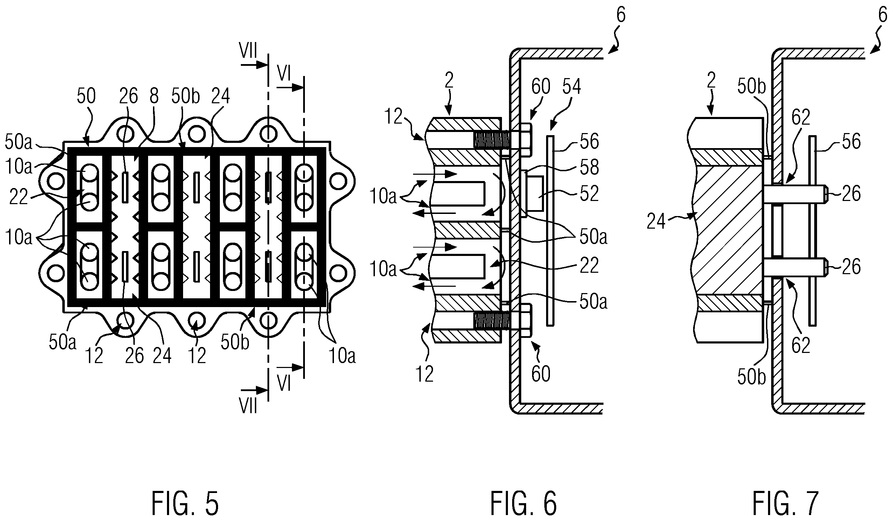

Die stirnseitige Ansicht des Gehäuses 2 gemäß Figur 5 verdeutlicht ein Dichtelement 50. Dieses Dichtelement 50 bildet eine zwei benachbarte Fluidkanäle 10a stirnseitig umschließende Kanaldichtung 50a wie auch eine Heizelementaufnahme 8 umschließende Heizelementdichtung 50b aus. Die Kanaldichtung 50a und die Heizelementdichtung 50b teilen sich Wandabschnitte, die sich in Figur 5 in Höhenrichtung zwischen den einzelnen Bereichen erstrecken. Das Dichtelement 50 liegt gegen die ebene Stirnfläche des Gehäuses 2 an. Auf der gegenüberliegenden Seite liegt entweder die Abdeckung 4 oder das Anschlussgehäuse 6 an. In Figur 5 ist das Dichtelement 50 zu dem Anschlussgehäuse 6 gezeigt.

Die Schnittansicht gemäß Figur 6 verdeutlicht die wärmeleitende Anlage eines Leistungstransistors 52, der als Teil einer Steuereinrichtung 54 dargestellt ist, die auch eine Leiterplatte 56 umfasst. Dieser Leistungstransistor 52 liegt an einem Wandabschnitt des Anschlussgehäuses 6, welches vorliegend aus Aluminium gebildet ist, wärmeleitend an. Dazwischen ist eine Kapton-Folie als elektrische Isolierung zwischen dem Anschlussgehäuse 6 und dem Leistungstransistor 52 vorgesehen.

Mit Bezugszeichen 60 sind selbstschneidende Schrauben gekennzeichnet, die das Anschlussgehäuse 6 durchsetzen und in den jeweiligen Befestigungskanal 12 eingeschraubt sind. Durch diese Schrauben 60 wird das Dichtelement 50 zwischen der Stirnseite des Gehäuses 2 und dem Anschlussgehäuse 6 verspannt.

In Figur 7 sind in dem Anschlussgehäuse 6 ausgesparte Durchführöffnungen 62 gezeigt, die von den Kontaktzungen 26 durchragt sind, welche mit der Leiterplatte 56 elektrisch kontaktiert sind und diese dazu durchragen.

### Bezugszeichenliste

- 2: Gehäuse
- 4: Abdeckung
- 6: Anschlussgehäuse
- 8: Heizelementaufnahme
- 10: Fluidkanal
- 10a: Fluidkanal
- 10b: Fluidkanal
- 12: Befestigungskanal
- 14: Einlassstutzen
- 16: Einlassöffnung
- 18: Auslassstutzen
- 19: Auslassöffnung
- 20: Umlenkstutzen
- 22: Mulde
- 24: Einpressprofil
- 26: Kontaktzunge
- 28: Leiterbahn
- 30: PTC-Aufnahme
- 32: PTC-Element
- 34: PTC-Heizeinrichtung
- 36: Isolierlage
- 38: Kompressionselement
- 40: Profilteil
- 42: Nutbegrenzungsvorsprung
- 44: Nut
- 46: Federvorsprung
- 48: Steg
- 50: Dichtelement
- 50a: Kanaldichtung
- 50b: Heizelementdichtung
- 52: Leistungstransistor
- 54: Steuereinrichtung
- 56: Leiterplatte
- 58: Kapton-Folie
- 60: Befestigungsschraube
- 62: Durchführöffnung
- E: Einbringrichtung

## Patentansprüche

1. Elektrische Heizvorrichtung mit einem Gehäuse (2), das eine zumindest ein PTC-Element (32) unter Vorspannung haltende Heizelementaufnahme (8) und zumindest einen Fluidkanal (10) ausbildet, und einer PTC-Heizeinrichtung (34) mit einem in die Heizelementaufnahme (8) eingebrachten Einpressprofil (24), das eine PTC-Aufnahme (30) ausbildet, in der das zumindest eine PTC-Element (32), elektrisch leitend daran anliegende Leiterbahnen (28) und gegebenenfalls eine die Leiterbahnen (28) isoliert gegen die PTC-Aufnahme abstützende Isolierung (36) vorgesehen sind, wobei das Gehäuse (2) aus einem Strangpressprofil gebildet ist, **dadurch gekennzeichnet, dass** zwischen dem Gehäuse (2) und dem Einpressprofil (24) durch das Gehäuse (2) und das Einpressprofil (24) Verformungsvorsprünge (42, 46) gebildet sind, durch die das Einpressprofil (24) unter einer Vorspannung in der Heizelementaufnahme (8) gehalten ist.

2. Elektrische Heizvorrichtung nach Anspruch 1, **dadurch gekennzeichnet, dass** das Gehäuse (2) mehrere sich parallel zueinander erstreckende Fluidkanäle (10) und zumindest eine sich zwischen zumindest zwei Fluidkanälen (10) parallel dazu erstreckende Heizelementaufnahme (8) ausbildet.

3. Elektrische Heizvorrichtung nach Anspruch 2, **dadurch gekennzeichnet, dass** das Gehäuse (2) an einer Stirnseite mit einer Abdeckung (4) versehen ist, durch die die Strömung von einem der Fluidkanäle (10) in einen anderen der Fluidkanäle (10) umgelenkt wird, und dass das Gehäuse (2) gegenüberliegend mit einem Anschlussgehäuse (6) versehen ist, das einen der Fluidkanäle (10) mit einer Einlassöffnung (16) für das zu erwärmende Fluid und den anderen der Fluidkanäle (10) mit einer Auslassöffnung (19) für das zu erwärmende Fluid verbindet.

4. Elektrische Heizvorrichtung nach Anspruch 3, **dadurch gekennzeichnet, dass** benachbarte Fluidkanäle (10a) in Reihe geschaltet und stirnseitig von einer Kanaldichtung (50a) umgeben sind, die Fluidkanäle (10a) gegenüber der Abdeckung (4) bzw. dem Anschlussgehäuse (6) abdichtet.

5. Elektrische Heizvorrichtung nach Anspruch 4, **dadurch gekennzeichnet, dass** die benachbarten Fluidkanäle (10a) durch eine an einer Stirnseite des Gehäuses (2) ausgesparte Mulde (22) miteinander kommunizieren.

6. Elektrische Heizvorrichtung nach einem der Ansprüche 3 bis 5, **dadurch gekennzeichnet, dass** zwischen dem Gehäuse (2) und dem Anschlussgehäuse (6) eine Heizelementdichtung (50b) vorgesehen ist, die die Heizelementaufnahme (8) abgedichtet umschließt.

7. Elektrische Heizvorrichtung nach Anspruch 6, **dadurch gekennzeichnet, dass** das Anschlussgehäuse (6) eine von der Heizelementdichtung (50b) umgebene Durchführöffnung (62) ausbildet, durch die elektrisch mit den Leiterbahnen (28) verbundene Kontaktzungen (26) in das Anschlussgehäuse (6) hineinragen.

8. Elektrische Heizvorrichtung nach einem der Ansprüche 3 bis 7, **dadurch gekennzeichnet, dass** das Anschlussgehäuse (6) eine Steuereinrichtung (52) zur Steuerung der zumindest einen PTC-Heizeinrichtung (34) umgibt und dass die Leiterbahnen (28) das Gehäuse (2) endseitig überragen, in das Anschlussgehäuse (6) verlängert und elektrisch an die Steuereinrichtung (52) angeschlossen sind.

9. Elektrische Heizvorrichtung nach einem der vorherigen Ansprüche, **dadurch gekennzeichnet, dass** Verformungsvorsprünge (42, 46) zwischen jeder Hauptseitenfläche des PTC-Elementes (32) und der gegenüberliegenden Innenseite der PTC-Aufnahme (30) vorgesehen sind.

10. Elektrische Heizvorrichtung nach einem der vorherigen Ansprüche, **dadurch gekennzeichnet, dass** eine Vielzahl von Verformungsvorsprüngen (42, 46) zwischen einer der Hauptseitenflächen des PTC-Elementes (30) und der gegenüberliegenden Innenfläche der Heizelementaufnahme (8) vorgesehen sind.

11. Elektrische Heizvorrichtung nach einem der vorherigen Ansprüche, **dadurch gekennzeichnet, dass** die Verformungsvorsprünge als ineinandergreifende Nut- und Feder-Elemente (42, 46) ausgebildet sind, dass zumindest ein die Nut (44) begrenzender Nutbegrenzungsvorsprung (42) und/oder zumindest ein die Feder zumindest teilweise ausbildender Federvorsprung (46) um eine sich in Einbringrichtung (E) erstreckende Achse verschwenkbar ist.

12. Elektrische Heizvorrichtung nach Anspruch 11, **dadurch gekennzeichnet, dass** zumindest ein die Nut (44) begrenzender Nutbegrenzungsvorsprung (42) und/oder zumindest ein die Feder zumindest teilweise ausbildender Federvorsprung (46) zu seinem freien Ende hin keilförmig zulaufend ausgebildet ist.

## Claims

1. Electric heating device with a housing (2), which forms a heating element receptacle (8) holding at least one PTC element (32) under pretension and at least one fluid channel (10), and a PTC heating assembly (34) with a press-fit profile (24) inserted into the heating element receptacle (8), which forms a PTC receptacle (30) in which the at least one PTC element (32), strip conductors (28) abutting thereon in an electrically conductive manner and, if appropriate, an insulation (36) supporting the strip conductors (28) in an insulated manner against the PTC receptacle are provided, wherein the housing (2) is formed from an extruded profile, **characterized in that** deformation projections (42, 46) are formed between the housing (2) and the press-fit profile (24) by the housing (2) and the press-fit profile (24), by means of which projections the press-fit profile (24) is held under a pretension in the heating element receptacle (8).

2. Electric heating device according to claim 1, **characterized in that** the housing (2) forms a plurality of fluid channels (10) extending parallel to each other and at least one heating element receptacle (8) extending between at least two fluid channels (10) parallel thereto.

3. Electric heating device according to claim 2, **characterized in that** the housing (2) is provided at an end face with a cover (4) through which the flow is deflected from one of the fluid channels (10) into another of the fluid channels (10), and **in that** the housing (2) is provided on the opposite side with a connection housing (6) which connects one of the fluid channels (10) to an inlet opening (16) for the fluid to be heated and the other of the fluid channels (10) to an outlet opening (19) for the fluid to be heated.

4. Electric heating device according to claim 3, **characterized in that** adjacent fluid channels (10a) are connected in series and are surrounded at the end face by a channel seal (50a) which seals off fluid channels (10a) from the cover (4) or connection housing (6).

5. Electric heating device according to claim 4, **characterized in that** the adjacent fluid channels (10a) communicate with each other through a trough (22) recessed on an end face of the housing (2).

6. Electric heating device according to one of claims 3 to 5, **characterized in that** a heating element seal (50b) is provided between the housing (2) and the connection housing (6) and sealingly encloses the heating element receptacle (8).

7. Electric heating device according to claim 6, **characterized in that** the connection housing (6) forms a lead-through opening (62) surrounded by the heating element seal (50b), through which contact tongues (26) electrically connected to the strip conductors (28) project into the connection housing (6).

8. Electric heating device according to one of claims 3 to 7, **characterized in that** the connection housing (6) surrounds a control device (52) for controlling the at least one PTC heating assembly (34), and **in that** the strip conductors (28) project beyond the end of the housing (2), are extended into the connection housing (6) and are electrically connected to the control device (52).

9. Electric heating device according to one of the preceding claims, **characterized in that** deformation projections (42, 46) are provided between each main side surface of the PTC element (32) and the opposite inner side of the PTC receptacle (30).

10. Electric heating device according to one of the preceding claims, **characterized in that** a plurality of deformation projections (42, 46) are provided between one of the main side surfaces of the PTC element (30) and the opposite inner surface of the heating element receptacle (8).

11. Electric heating device according to one of the preceding claims, **characterized in that** the deformation projections are configured as interlocking groove and spring elements (42, 46), **in that** at least one groove limiting projection (42) limiting the groove (44) and/or at least one spring projection (46) at least partially forming the spring can be pivoted about an axis extending in the insertion direction (E).

12. Electric heating device according to claim 11, **characterized in that** at least one groove limiting projection (42) limiting the groove (44) and/or at least one spring projection (46) at least partially forming the spring is configured to be wedge-shaped tapering towards its free end.

## Revendications

1. Dispositif de chauffage électrique comprenant un boîtier (2) qui forme un logement d'élément chauffant (8), retenant de manière précontrainte au moins un élément PTC (32), et au moins un canal de fluide (10), et comprenant un dispositif de chauffage PTC (34) avec un profilé d'insertion (24) qui est introduit dans le logement d'élément chauffant (8) et qui forme un logement PTC (30) au sein duquel sont prévus le au moins un élément PTC (32), des pistes conductrices (28) électriquement conductrices présentes sur ledit élément PTC, et éventuellement une isolation (36) supportant les pistes conductrices (28) de manière isolée par rapport au logement PTC, dans lequel le boîtier (2) est formé à partir d'un profilé extrudé, **caractérisé en ce que** des saillies de déformation (42, 46), grâce auxquelles le profilé d'insertion (24) est retenu de manière précontrainte dans le logement d'élément chauffant (8), sont formées à travers le boîtier (2) et le profilé d'insertion (24) entre le boîtier (2) et le profilé d'insertion (24).

2. Dispositif de chauffage électrique selon la revendication 1, **caractérisé en ce que** le boîtier (2) forme plusieurs canaux de fluide (10) s'étendant parallèlement les uns aux autres et au moins un logement d'élément chauffant (8) s'étendant entre au moins deux canaux de fluide (10) parallèlement à ceux-ci.

3. Dispositif de chauffage électrique selon la revendication 2, **caractérisé en ce que** le boîtier (2) est muni d'un cache (4) au niveau d'une face frontale, à travers lequel la circulation entre un des canaux de fluide (10) et l'autre canal de fluide (10) est déviée, et **en ce que** le boîtier (2) est muni, en vis-à-vis, d'un boîtier de raccordement (6) qui relie un des canaux de fluide (10) à une ouverture d'entrée (16) destinée au fluide à chauffer et relie l'autre canal de fluide (10) à une ouverture de sortie (39) destinée au fluide à chauffer.

4. Dispositif de chauffage électrique selon la revendication 3, **caractérisé en ce que** des canaux de fluide (10a) voisins sont connectés en série et sont entourés du côté frontal par un joint d'étanchéité de canal (50a) qui rend les canaux de fluide (10a) étanches par rapport au cache (4) ou au boîtier de raccordement (6).

5. Dispositif de chauffage électrique selon la revendication 4, **caractérisé en ce que** les canaux de fluide (10a) voisins communiquent entre eux par une cuvette (22) ménagée au niveau d'une face frontale du boîtier (2).

6. Dispositif de chauffage électrique selon l'une quelconque des revendications 3 à 5, **caractérisé en ce qu'**entre le boîtier (2) et le boîtier de raccordement (6) est prévu un joint d'étanchéité d'élément chauffant (50b) qui entoure de manière étanche le logement d'élément chauffant (8).

7. Dispositif de chauffage électrique selon la revendication 6, **caractérisé en ce que** le boîtier de raccordement (6) forme une ouverture de passage (62) entourée par le joint d'étanchéité d'élément chauffant (50b), à travers laquelle des languettes de contact (26) reliées électriquement aux pistes conductrices (28) pénètrent dans le boîtier de raccordement (6).

8. Dispositif de chauffage électrique selon l'une quelconque des revendications 3 à 7, **caractérisé en ce que** le boîtier de raccordement (6) entoure un dispositif de commande (52) permettant de commander le au moins un dispositif de chauffage PTC (34) et **en ce que** les pistes conductrices (28) dépassent du boîtier (2) du côté de l'extrémité, se prolongent dans le boîtier de raccordement (6) et sont raccordées électriquement au dispositif de commande (52).

9. Dispositif de chauffage électrique selon l'une quelconque des revendications précédentes, **caractérisé en ce que** des saillies de déformation (42, 46) sont prévues entre chaque surface latérale principale de l'élément PTC (32) et la face intérieure opposée du logement PTC (30).

10. Dispositif de chauffage électrique selon l'une quelconque des revendications précédentes, **caractérisé en ce qu'**une pluralité de saillies de déformation (42, 46) sont prévues entre une des surfaces latérales principales de l'élément PTC (30) et la surface intérieure opposée du logement d'élément chauffant (8).

11. Dispositif de chauffage électrique selon l'une quelconque des revendications précédentes, **caractérisé en ce que** les saillies de déformation sont réalisées sous la forme d'éléments formant rainure et ressort (42, 46) en prise les uns avec les autres, **en ce qu'**au moins une saillie de limitation de rainure (42) limitant la rainure (44) et/ou au moins une saillie de ressort (46) formant au moins partiellement le ressort peu(ven)t pivoter autour d'un axe s'étendant dans la direction d'introduction (E).

12. Dispositif de chauffage électrique selon la revendication 11, **caractérisé en ce qu'**au moins une saillie de limitation de rainure (42) délimitant la rainure (44) et/ou au moins une saillie de ressort (46) formant au moins partiellement le ressort est/sont réalisée(s) en forme de coin vers son extrémité libre.
